# EUROPÄISCHE PATENTSCHRIFT

(11) **EP 0 760 496 B1**
(45) Veröffentlichungstag und Bekanntmachung des Hinweises auf die Patenterteilung: **14.11.2001**
(21) Anmeldenummer: 96112698.4
(22) Anmeldetag: 07.08.1996
(51) Int. Cl.: G05B 19/42

(54) **Verfahren zur Bestimmung der Zuschnittsmasse für Verdecke**
Method to determine blank dimensions of tops
Méthode de détermination des dimensions de la tôle brute pour capotes

(30) Priorität: 29.08.1995 DE 19531843
(43) Veröffentlichungstag der Anmeldung: 05.03.1997
(73) Patentinhaber: Niemann, Hubert, 45279 Essen (DE)
(72) Erfinder: Niemann, Hubert, 45279 Essen (DE)
(74) Vertreter: Patentanwälte Meinke, Dabringhaus und Partner

(56) Entgegenhaltungen:
- EP-A- 0 311 925
- EP-A- 0 404 275
- WO-A-91/13706
- WO-A-93/00836
- DE-A- 3 826 712
- DE-A- 3 900 990
- US-A- 4 901 359
- US-A- 5 056 204

## Beschreibung

Die Erfindung betrifft ein Verfahren zur Bestimmung der Zuschnittsmaße für Verdecke von Land- oder Wasserfahrzeugen.

Bei Kleinserienfertigungen oder Einzelanfertigungen von Fahrzeugen, wie Yachten, Kutschen oder dgl. werden die Verdecke ebenfalls in Einzelanfertigung hergestellt, wobei diese Verdeckherstellung ausgesprochen aufwendig ist, weil es erforderlich ist, die Zuschnittsmaße für das Verdeck am Fahrzeug selbst abzumessen. Dies erfolgt bisher dadurch, daß eine Verdeckplane am Verdeckaufbau der Yacht oder der Kutsche angelegt wird und die Anlage- und Befestigungspunkte an der Verdeckplane manuell eingezeichnet werden. Danach wird das Verdeck dann aufgrund der abgemessenen Maße aus der Verdeckplane zugeschnitten und zusammengenäht. Hierbei kann es leicht zu Ungenauigkeiten kommen, wenn das Einzeichnen der Zuschnittsmaße nicht exakt erfolgt ist.

Von wesentlichem Nachteil ist aber vor allem, daß es erforderlich ist, das mit dem Verdeck auszurüstende Fahrzeug zu einer Werkstatt zu transportieren, was sehr aufwendig oder insbesondere bei größeren Yachten kaum möglich ist, oder daß der betreffende Handwerker jeweils zum Standort des Fahrzeuges reisen muß, was ersichtlich mit noch größerem Aufwand verbunden ist.

Von weiterem Nachteil ist, daß die Handwerker am Standort des Fahrzeuges sich zumindest bei Yachten oder dgl. ständig unter freiem Himmel befinden, so daß das Arbeiten stark vom Wetter abhängig ist. Bei Regen oder insbesondere bei Wind ist nämlich die Maßerfassung mittels Anlegen einer Verdeckplane durch die Segelwirkung der Verdeckplane nahezu unmöglich.

Aufgabe der Erfindung ist es deshalb, die Herstellung von Verdecken für Land- oder Wasserfahrzeuge wesentlich zu vereinfachen.

Diese Aufgabe wird mit einem Verfahren der eingangs bezeichneten Art erfindungsgemäß dadurch gelöst, daß am Fahrzeug die Positionen der geplanten Verdeckbefestigungs- bzw. Verdeckanlagepunkte mittels einer Koordinatenerfassung auf optisch-elektronischem oder mechanischelektronischem Wege erfaßt und aus dieser Koordinatenerfassung das jeweilige Zuschnittsmaß rechnergestützt bestimmt wird.

Durch diese neuartige Verfahrensführung wird ersichtlich die Zuschnittsmaßerstellung zur Herstellung derartiger Verdecke wesentlich vereinfacht. Dazu ist es lediglich erforderlich, am Fahrzeug selbst die für das später herzustellende Verdeck am Fahrzeug benötigten Verdeckbefestigungs- und Verdeckanlagepunkte zu bestimmen und geeignet am Fahrzeug zu markieren und dann mittels eines geeigneten mobilen optischen Meßsystems, beispielsweise mittels einer entsprechend ausgerüsteten Kamera, am Fahrzeug selbst die betreffenden, entsprechend markierten Verdeckbefestigungs- und Verdeckanlagepunkte zu bestimmen und dann aus diesen aufgenommenen Meßdaten anschließend in der vom Meßplatz entfernten Werkstatt rechnergestützt über ein geeignetes CAD-System das Schnittmuster zu bestimmen, aus dem dann auf einfache Weise das Verdeck hergestellt werden kann. Dadurch werden sowohl Fertigungsungenauigkeiten vermieden als auch der beträchtliche Aufwand bei der bisherigen Verdeckherstellung, da die eigentliche Verdeckherstellung völlig unabhängig vom Standort des Fahrzeuges, beispielsweise der Yacht, erfolgen kann. Neben dieser optischen Koordinatenerfassung ist es alternativ auch möglich, die Koordinaten mechanischelektronisch zu erfassen, z.B. mittels des an sich bekannten Prinzips des räumlichen Bogenschnittes, bei welchem mechanisch gemessene Strecken durch elektronischen Abgriff bestimmt werden, wie beispielsweise aus dem Firmenprospekt der Dr. Meywald KG in D-34445 Arolsen-Mengeringhausen bekannt ist.

Ein wesentlicher weiterer Vorteil dieses Verfahrens ist darüber hinaus, daß der Kunde nach der Maßerfassung am Rechner ein Abbild des später im Fertigungsbetrieb entstehenden Verdeckes sehen kann. Der Kunde ist sodann in der Lage, exakt z.B. die Form des Verdecks, Fenster, Ausschnitte, Verdecköffnungen und dgl. mitzubestimmen. Auch kann man dieses Bild auf einem Drucker ausdrucken und dem Kunden überlassen.

Zwar sind derartige optische und auch mechanische Meß-systeme mit Koordinatenerfassung schon seit längerem bekannt, diese werden aber bisher vorwiegend zu Überwachungszwecken in Herstellungsprozessen eingesetzt, um zu überprüfen, ob fertige Werkstücke bzw. Produkte meßtechnisch den Vorgaben entsprechen. Bekannt ist es auch, diese optischen Meßsysteme beispielsweise zur Vermessung von verunfallten Fahrzeugen einzusetzen.

Aus der DE 35 17 714 C2 und der DE 41 11 304 C2 ist es bekannt, Werkstücke wie Holz, Tierfelle oder Textilien optisch zu vermessen und dann das so erhaltene Abbild computergestützt auszuwerten und anschließend aus dem vorhandenen Werkstück je nach den Anforderungen eine geeignete Anzahl von Zuschnitten zu erstellen, d.h. für eine optimale Verwertung des Werkstückes in Einzelzuschnitte zu sorgen. Diese bekannten Verfahren sind jedoch offensichtlich nicht mit dem anmeldungsgemäßen Verfahren vergleichbar.

In vorteilhafter Ausgestaltung ist vorgesehen, daß aus dem ermittelten Zuschnittsmaß ein Schnittmuster erstellt wird, d.h. das Schnittmuster wird über einen Plotter oder dgl. in Hardcopy ausgegeben, woraus dann anschließend das Verdeck erstellt werden kann, entweder von Hand oder mit Hilfe eines Digitalisierbrettes.

Alternativ ist besonders vorteilhaft vorgesehen, daß das Zuschnittsmaß unmittelbar an einen Zuschneide-Cutter übertragen wird. Ein Zwischenschritt über einen Computerzeichnungsausdruck des Zuschnittsmaßes entfällt dann, es kann automatisch der Verdeckzuschnitt aus den konstruierten Zuschnittsmaßen erstellt werden.

Vorstehend ist vorausgesetzt worden, daß alle Befestigungspunkte am mit dem Verdeck auszurüstenden Fahrzeug bereits vorhanden sind. Ist jedoch kein Verdeckgestell (kein Spriegel) am Fahrzeug vorhanden, weil am Fahrzeug noch überhaupt kein Verdeck im gewünschten Maße montiert war, ist vorteilhaft vorgesehen, daß vor der Koordinatenerfassung ein Verdeckgestellmodell am Fahrzeug montiert wird. Ein solches Verdeckgestellmodell kann beispielsweise aus einem Stecksystem gebildet werden, welches vor der Erfassung der Befestigungs- und Anlagepunkte am Standort des Fahrzeuges gemäß der Fahrzeugmaße zusammengesteckt und vormontiert wird. Es dient anschließend als Maßgeber für den im Herstellbetrieb entsprechend der Maße und Funktion zu konstruierenden und zu erstellenden Verdeckspriegel. Dieser endgültige Spriegel wird mit dem Verdeck geliefert und am Fahrzeug montiert.

Bei optisch-elektronischer Koordinatenerfassung ist vorteilhaft vorgesehen, daß die zu messenden Punkte codiert werden, indem an den Meßpunkten beispielsweise mit einem Code versehene Aufkleber befestigt werden. Es ist nämlich zu bedenken, daß der Verdecksaum nicht oder nicht an allen Meßpunkten im gleichen Maße über die Meßpunkte überlappen muß. Durch eine derartige Codierung läßt sich dies berücksichtigen, da der Code von der Kamera erfaßt und über geeignete Software dann entschlüsselt werden kann. In dem jeweiligen Code ist dann als Information für den jeweiligen Meßpunkt beispielsweise die jeweilige Saumbreite oder dgl. (z.B. auch Befestigungsöffnungen) abgespeichert.

Wird eine mechanisch-elektronische Koordinatenerfassung eingesetzt, wird die Maßerfassungsspitze einer solchen Einrichtung an notwendige Verdecküberstände angepaßt. Dies kann durch entsprechende Funktionstasten am Handgriff der Maßerfassungsspitze entsprechend der bei der Konstruktion des Verdeckes zu berücksichtigende Saummaße erfaßt werden, d.h. bei der Abtastung eines Meßpunktes wird eine bestimmte Funktionstaste betätigt, der die jeweilige Information (spezielle Saumbreite oder dgl.) zugeordnet ist. Dem jeweils abgetasteten Meßpunkt wird dann über geeignete Software diese jeweilige Funktion zugeordnet, d.h. es wird z.B. eine bestimmte Saumbreite berücksichtigt.

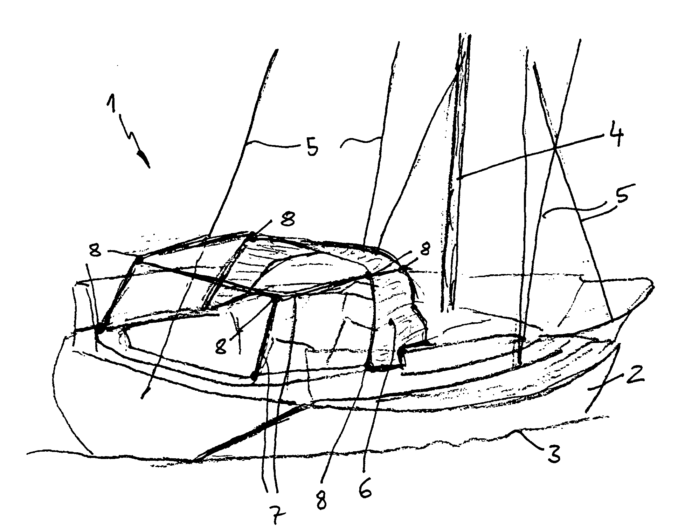

Die Erfindung ist nachstehend anhand der Zeichnung beispielsweise näher erläutert. Diese zeigt in der einzigen Figur beispielhaft in perspektivischer Darstellung eine Segelyacht mit angedeutetem Verdeck.

Eine allgemein mit 1 bezeichnete Segelyacht weist einen mit 2 bezeichneten Bootsrumpf auf, welcher auf einer angedeuteten Wasseroberfläche 3 schwimmt. Darüber hinaus ist ein Mast 4 angedeutet sowie eine Mehrzahl von Stagen 5, die mit den nicht dargestellten Segeln und dem Mast 4 verbunden sind.

Darüber hinaus ist ein Verdeck 6 dargestellt, und zwar in nur teilweise geschlossener Form, dieses Verdeck 6 kann nach hinten zum Heck hin weiter ausgezogen werden, wozu ein Verdeckgestell 7 vorgesehen ist.

Um eine solche Segelyacht 1 mit einem Verdeck 6 auszurüsten bzw. ein vorhandenes Verdeck 6 zu ersetzen, ist es erforderlich, die Verdeckanlage- und -befestigungspunkte zu bestimmen und aufgrund dieser Maße ein Zuschnittsmaß zu erstellen, woraus dann das Verdeck 6 hergestellt werden kann. In der Zeichnung sind Befestigungs- und -anlagepunkte des Verdecks beispielhaft gezeigt und mit dem Bezugszeichen 8 bezeichnet.

Soll nun eine Segelyacht 1 mit einem neuen Verdeck 6 ausgerüstet werden, so werden erfindungsgemäß die charakteristischen Verdeckbefestigungs- bzw. -anlagepunkte 8 so optisch gekennzeichnet, daß sie vor Ort, d.h. beispielsweise am Liegeplatz der Yacht, von einer im Handel verfügbaren mobilen Digitalkamera (beispielsweise Kodak-Professional DCS 420) aufgenommen werden können. Dabei handelt es sich um eine Digitalkamera mit einem Flächensensor, der das Fotografieren von sich bewegenden Objekten ermöglicht. Diese Kamera enthält ein Speichersystem mit Wechselfestplatten und kann an einen Rechner angeschlossen werden, mit dem die aufgenommenen Bilddaten dann weiter verarbeitet werden können. Anstelle einer solchen Kamera können selbstverständlich auch Videokameras oder andere optische Meßsysteme eingesetzt werden.

Nach der Aufnahme der Verdeckbefestigungs- und -anlagepunkte 8 für das zu erstellende Verdeck 6 können die aufgenommenen Bilddaten dann in der Werkstatt selbst rechnergestützt von einem geeigneten CAD-System weiterverarbeitet werden, d.h. aus den ermittelten Koordinaten läßt sich dann räumlich getrennt von der Yacht 1 das Zuschnittsmaß für das gewünschte Verdeck 6 auf einfache Weise erstellen.

Ist dieses Zuschnittsmaß vorhanden, welches über einen Drucker oder dgl. als Hardcopy ausgegeben werden kann, kann anschließend auf herkömmliche Weise das Verdeck 6 genäht werden, welches dann nach Fertigstellung vor Ort an der Yacht oder dgl. befestigt wird.

Das erfindungsgemäße Verfahren eignet sich selbstverständlich nicht nur zur Herstellung von Verdecken für Segel- oder Motoryachten, sondern auch für andere mobile Fahrzeuge mit Verdecken, z.B. Kutschen oder dgl.

## Patentansprüche

1. Verfahren zur Bestimmung der Zuschnittsmaße für Verdecke von Land- oder Wasserfahrzeugen,
**dadurch gekennzeichnet,**
**daß** am Fahrzeug die Positionen der geplanten Verdeckbefestigungs- bzw. Verdeckanlagepunkte mittels einer Koordinatenerfassung auf optisch-elektronischem oder mechanisch-elektronischem Weg erfaßt und aus dieser Koordinatenerfassung das jeweilige Zuschnittsmaß rechnergestützt bestimmt wird.

2. Verfahren nach Anspruch 1,
**dadurch gekennzeichnet,**
**daß** aus dem ermittelten Zuschnittsmaß ein Schnittmuster erstellt wird.

3. Verfahren nach Anspruch 1,
**dadurch gekennzeichnet,**
**daß** das Zuschnittsmaß unmittelbar an einen Zuschneide-Cutter übertragen wird.

4. Verfahren nach Anspruch 1 oder einem der folgenden,
**dadurch gekennzeichnet,**
**daß** vor der Koordinatenerfassung ein Verdeckgestellmodell am Fahrzeug montiert wird.

5. Verfahren nach Anspruch 1 oder einem der folgenden,
**dadurch gekennzeichnet,**
**daß** bei optisch-elektronischer Koordinatenerfassung die zu messenden Punkte codiert werden.

6. Verfahren nach einem oder mehreren der Ansprüche 1 bis 4,
**dadurch gekennzeichnet,**
**daß** bei mechanisch-elektronischer Koordinatenerfassung die Maßerfassungsspitze an notwendige Verdecküberstände angepaßt wird.

## Claims

1. Method for determining the cutting-out sizes of canopies for land or water craft,
**characterised in that**
the positions of the proposed canopy fixing points or canopy attachment points are opto-electronically or mechano-electrically recorded on the craft by a process of taking coordinates, and the respective cutting-out size is determined from said coordinate-taking process with the aid of a computer.

2. Method according to claim 1,
**characterised in that** a cutting pattern is prepared from the cutting-out size which has been established.

3. Method according to claim 1,
**characterised in that** the cutting-out size is transferred direct to a cutter.

4. Method according to claim 1 or one of the following claims,
**characterised in that** before the coordinates are taken a canopy frame model is fitted on the craft.

5. Method according to claim 1 or one of the following claims,
**characterised in that** in the case of opto-electronic coordinate-taking the points to be measured are coded.

6. Method according to one or more of claims 1 to 4,
**characterised in that** in the case of mechanoelectronic coordinate-taking the dimension fixing peak is adapted to necessary projecting lengths of the canopy.

## Revendications

1. Procédé pour la détermination des dimensions d'un flan destiné à des capotes de véhicules terrestres ou nautiques,
**caractérisé en ce que** l'on saisit sur le véhicule les positions des points prévus pour la fixation ou pour l'appui de la capote au moyen d'un système de détection de coordonnées par voie optique-électronique, ou par voie mécanique-électronique, et l'on détermine à partir de cette détection de coordonnées la dimension respective du flanc, à l'aide d'un ordinateur.

2. Procédé selon la revendication 1, **caractérisé en ce que** l'on produit un patron de coupe à partir des dimensions de flan déterminées.

3. Procédé selon la revendication 1, **caractérisé en ce que** les dimensions du flan sont directement transmises à un organe de coupe.

4. Procédé selon la revendication 1 ou l'une des suivantes, **caractérisé en ce qu'**un modèle d'ossature de capote est monté sur le véhicule avant la détection de coordonnées.

5. Procédé selon la revendication 1 ou l'une des suivantes, **caractérisé en ce que** lors de la détection de coordonnées par voie optique-électronique, les points à mesurer sont codés.

6. Procédé selon l'une ou plusieurs des revendications 1 à 4, **caractérisé en ce que** lors de la détection de coordonnées par voie mécanique-électronique, la pointe de détection de mesure est adaptée à des dépassements nécessaires pour la capote.
